# EUROPEAN PATENT APPLICATION

(11) **EP 4 599 741 A1**
(43) Date of publication of application: **13.08.2025**
(21) Application number: 24156018.4
(22) Date of filing: 06.02.2024
(51) Int. Cl.: A47J 31/06, A47J 31/46, A47J 31/44

(54) **BEVERAGE OUTLET ASSEMBLY FOR A KITCHEN BREWING VESSEL**

(71) Applicant: Versuni Holding B.V., 5656 AE Eindhoven (NL)
(72) Inventor: NOORDHUIS, Joeke, 5656 AE Eindhoven (NL); HOLWERDA, Simon Renze, 5656 AE Eindhoven (NL)
(74) Representative: Vollering, Stefanus Franciscus Maria

(57) **Abstract**

Provided is a beverage outlet assembly (114) for a kitchen brewing vessel. The beverage outlet assembly comprises an outlet member (111) that delimits an orifice (112) through which a beverage brewed in the brewing vessel is deliverable. The outlet member has a flange portion (111A) and a neck portion (111B) that protrudes from the flange portion. The orifice extends between a first exterior opening delimited by the flange portion and a second exterior opening delimited by the neck portion so as to define an axial flow path for the beverage through the orifice. The orifice becomes increasingly narrower from the first exterior opening towards the second exterior opening. Also provided is a brewing vessel assembly, e.g. a portafilter, that comprises the beverage outlet assembly and the kitchen brewing vessel. Further provided is a beverage machine comprising the brewing vessel assembly and a liquid dispenser for dispensing liquid into the brewing vessel.

## Description

### FIELD OF THE INVENTION

The invention relates to a beverage outlet assembly for controlling flow of a beverage brewed in a kitchen brewing vessel.

The invention further relates to a brewing vessel assembly comprising the beverage outlet assembly and the kitchen brewing vessel.

The invention yet further relates to a beverage machine, for example a coffee machine, such as an automatic or semi-automatic coffee machine, comprising the brewing vessel assembly and a liquid dispenser.

### BACKGROUND OF THE INVENTION

There are many different types of commercially available beverage machines. Beverage machines, such as coffee machines, can vary in terms of how much a user is required to interact with the beverage machine during use.

In a manual espresso machine, the user fills a brewing vessel, which brewing vessel is included in a so-called portafilter, with coffee grounds. The user then tamps the coffee grounds within the brewing vessel with sufficient pressure to create a so-called puck of ground coffee. The brewing vessel containing the puck is mounted to the coffee machine, usually via a bayonet-type coupling. Next, the coffee machine drives hot water through the puck and the resulting coffee is dispensed via a spout that is typically integrated in the portafilter. After brewing, the user is required to disconnect the portafilter from the coffee machine, and empty the portafilter, throwing away the used coffee grounds.

There are also manual espresso machines with an integrated grinder. In such machines, the portafilter may be movable by the user between a first position where it receives ground coffee and a second position where coffee is brewed. Tamping may be done manually or via a manually operated lever.

In a fully automatic espresso machine, all of the above-mentioned steps are done automatically, in one and the same machine. The machine comprises a bean container and a grinder, to make the coffee grounds. These grounds are transported into a brewing vessel and tamped automatically, via a piston that may be hydraulically actuated or actuated via an electromotor. Next, hot water is driven through the coffee grounds in the brewing vessel, coffee is brewed and dispensed, and the used coffee grounds are discharged from the brewing vessel into a waste bin within the machine. By these steps being implemented automatically, the fully automatic espresso machine can save the user time. Moreover, consistent results are achievable due to the machine being capable of implementing the steps more repeatably than a user.

Careful control over fluid pressure and flow through the brewing vessel may be desirable in each of the above-described beverage machines. In particular, a valve can be used to assist with maintaining elevated pressure in the brewing vessel during the brewing of the beverage. Such a valve may be a passive component, e.g. equipped with a spring, that only permits flow above a certain pressure.

By maintaining elevated pressure in the brewing vessel in this manner, exit of the brewed beverage at a desired flow rate, for instance with a crema layer in the case of brewed coffee, can be assisted.

Regarding the crema layer, this tends to be seen as a sign of good quality of the brewed coffee. Such a crema layer can be provided by ensuring that the coffee pressure is greater than 4 bar, so as to retain carbon dioxide in solution until the coffee is released into the user's cup or pot. For this reason, this valve can be termed a "crema valve".

A potential disadvantage of such a valve may be that more liquid, e.g. water, stays behind in the brewing vessel after brewing is complete, which can result in a wet, easily disintegrable mass of granular material that can be difficult to remove from the brewing vessel. The latter may also be regarded by consumers as an indication of poor quality.

### SUMMARY OF THE INVENTION

The invention is defined by the claims.

According to examples in accordance with an aspect of the invention, there is provided a beverage outlet assembly for a kitchen brewing vessel, the beverage outlet assembly comprising an outlet member that delimits an orifice through which a beverage brewed in the brewing vessel is deliverable, the outlet member having a flange portion and a neck portion that protrudes from the flange portion, the orifice extending between a first exterior opening delimited by the flange portion and a second exterior opening delimited by the neck portion so as to define an axial flow path for the beverage through the orifice, the orifice narrowing from the first exterior opening towards the second exterior opening.

As well as assisting to maintain elevated pressure in the brewing vessel, the orifice may assist to mitigate the above-described issue relating to the wet, easily disintegrable mass of granular material. In this respect, the orifice can assist to promote complete emptying of the brewing vessel, for example as well as assisting to achieve a desired temperature of the brewed beverage received in the user's cup/pot.

The flange portion and the neck portion protruding from the flange portion, together with the orifice narrowing, in other words becoming increasingly narrower, from the first exterior opening towards the second exterior opening, may provide a funnel-like structure.

This funnel-like structure has been found to provide enhanced stress distribution in the outlet member, and may thus alleviate the risk of cracking of the outlet member as a consequence of pressures exerted during repeated beverage brewing. In particular, this risk of cracking may be lessened compared to, for example, a plate-like outlet member delimiting an orifice of constant diameter that extends across a thickness of the outlet member between exterior surfaces that are parallel with each other.

The funnel-like structure may reflect the fact that a planar outlet member may naturally deform to a funnel shape when subjected to an elevated pressure on one side of the outlet member.

It is generally noted that the flange portion and the neck portion may be formed, e.g. molded, as a single piece.

Alternatively or additionally, the flange portion and the neck portion may each be formed from an elastomeric material, such as silicone.

Forming the flange portion and the neck portion from such an elastomeric material can assist to alleviate the risk of blockage of the orifice, since the elastomeric material may deform to allow a particle that has become stuck in the orifice to pass therethrough instead of continuing to block the orifice.

Alternatively or additionally, such an elastomeric material may assist to provide enhanced pressure-flow characteristics relative to those attainable using a rigid material for the outlet member. For example, the elastomeric material can assist to make a desired pressure range achievable across a wider flow range.

A further benefit of the elastomeric material may be self-sealing of the outlet member in its seat, e.g. in a seat provided by a support member. Such self-sealing can, for example, obviate the need for a press-fit.

The elastomeric material can be of any suitable type. Particular mention is made of the elastomeric material being an oil-resistant elastomer/rubber, for example silicone. Preferably, the elastomeric material comprises silicone.

In some embodiments, the flange portion and the neck portion are each formed from a material, e.g. the elastomeric material, such as silicone, whose hardness is from 50 to 80 Shore A, preferably about 70 Shore A.

Such a hardness may provide sufficient flexibility to minimize blockage of the orifice while also helping to resist change of the orifice's dimensions when the outlet member is subjected to elevated pressure during brewing.

In some embodiments, a wall thickness of the neck portion is 0.2 to 2 mm. Such a wall thickness may facilitate distribution of stress in the outlet member, while also assisting to resist change of the orifice's dimensions during brewing, particularly in embodiments in which the neck portion is formed from the elastomeric and/or the 50 to 80 Shore A material.

In some embodiments, the flange portion has an interior surface portion that delimits a first part of the orifice that is provided in the flange portion, with the interior surface portion curvedly extending away from the first exterior opening.

In such embodiments, the curvature of the interior surface portion may cause narrowing of the first part of the orifice towards the second exterior opening delimited by the neck portion. This curved extension of the interior surface portion can assist to distribute stress in the outlet member.

As an alternative or in addition to the curvedly extending interior surface portion, the neck portion may comprise a further interior surface portion that narrows towards the second exterior opening delimited by the neck portion. In some embodiments, a curvature of the further interior surface portion is smaller than that of the interior surface portion.

Alternatively or additionally, the further interior surface portion may comprise a tapering section whose taper angle is 5 to 100 degrees, preferably 20 to 60 degrees. Such a taper angle may provide particularly beneficial pressure-flow characteristics.

In some embodiments, the flange portion has a first exterior surface portion, and the neck portion has a second exterior surface portion, with an intermediate exterior surface portion curvedly extending between the first exterior surface portion and the second exterior surface portion. This curved extension of the intermediate exterior surface portion can assist to distribute stress in the outlet member, for example in combination with the curved extension of the interior surface portion away from the first exterior opening delimited by the flange portion.

In some embodiments, the orifice's minimum cross-sectional area for determining flow rate through the orifice is 0.03 to 0.5 mm², preferably 0.03 to 0.2 mm², such as about 0.09 mm². This range for the orifice's minimum cross-sectional area may assist to promote brewing performance, for example crema layer generation, whilst also facilitating emptying of the brewing vessel after brewing.

It is noted that this minimum cross-sectional area may be measured when there is no liquid flow through the orifice. This is to avoid any variation in dimensions, e.g. diameter, of the orifice as a result of such a liquid flow.

The orifice may, for example, have a circular cross-section, e.g. a circular cross-section at all points along the flow path provided by the orifice.

In embodiments in which the orifice has such a circular cross-section, the smallest diameter of the orifice may be 0.2 to 0.5 mm, preferably about 0.34 mm.

In some embodiments, the beverage outlet assembly comprises a support member, for example a support plate, configured to support the outlet member.

The support member, e.g. support plate, may be formed from any suitable material. Particular mention is made of the support member being formed from a rigid material, such as a rigid plastic and/or a metallic material.

The support member, e.g. support plate, may include a main surface portion for supporting the flange portion of the outlet member, and an aperture for receiving at least part of the neck portion of the outlet member when the support member is supporting the outlet member.

In some embodiments at least part of the intermediate exterior surface portion of the outlet member may be shaped to contact and follow the curvature of the curved surface portion. In this way, the risk of damage to the outlet member by deformation against the support member can be lessened.

Alternatively or additionally, a free part of the neck portion may be spaced apart from, and free to move relative to, the support member while the outlet member is being supported by the support member.

The play provided by the free part of the neck portion may assist stress distribution in the outlet member, and thus assist to lessen the risk of premature failure of the outlet member.

In some embodiments, a gap between the free part of the neck portion and the support member becomes larger, for example becomes progressively larger, with greater extension of the neck portion away from the flange portion.

Maximum play may, for instance, be provided around the second exterior opening delimited by the neck portion.

In some embodiments, the orifice's maximum cross-sectional area in a portion of the orifice delimited by said free part of the neck portion is smaller than nine times, preferably smaller than four times, the orifice's minimum cross-sectional area when there is no liquid flow through the orifice. This has been found to provide favorable and consistent brewing performance.

According to another aspect there is provided a brewing vessel assembly comprising: a kitchen brewing vessel having a cavity in which granular material and liquid are receivable to enable brewing of a beverage; and the beverage outlet assembly according to any one of the embodiments described herein.

The outlet member may be arranged or arrangeable in the brewing vessel assembly so that the first exterior opening of the orifice defines an upstream opening for initially receiving the beverage brewed in the cavity and the second exterior opening of the orifice defines a downstream opening for subsequently allowing the beverage to exit the outlet member.

It is generally noted that the outlet member may be arranged downstream of a filter, e.g. perforate base, on which the granular material is supportable when received in the cavity.

In some embodiments, the orifice's position is offset with respect to a center of the cavity. This eccentric positioning of the orifice may assist to provide space in which the flow of beverage through the orifice can slow down prior to exiting the brewing vessel assembly, in a way that minimizes creation of additional turbulence-induced bubbles.

According to a further aspect there is provided a beverage machine comprising: the brewing vessel assembly according to any of the embodiments described herein; and a liquid dispenser for dispensing liquid into the cavity.

In some embodiments, the liquid dispenser and the brewing vessel assembly are configured to enable a fluid pressure of at least 4 bar, more preferably, at least 5 bar, most preferably 5 to 7.8 bar, to be provided for forcing said liquid through the cavity containing the granular material.

This pressure range may promote brewing performance, for example crema layer generation in the case of coffee brewing.

The beverage machine may comprise a semi-automatic coffee machine, a fully automatic coffee machine, or a manual espresso machine.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 shows a beverage machine according to an example;
FIGs. 2A and 2B provide views of a brewing vessel assembly according to an example;
FIG. 3 provides a cross-sectional view of a beverage outlet assembly according to an example;
FIGs. 4A and 4B provide views of an outlet member included in the beverage outlet assembly shown in FIG. 3;
FIG. 5 shows part of an outlet member according to another example; and
FIG. 6 provides graphs of average counterpressure (bar; upper plots) and flow (ml/s; lower plots) vs. time (seconds).

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a beverage outlet assembly for a kitchen brewing vessel. The beverage outlet assembly comprises an outlet member that delimits an orifice through which a beverage brewed in the brewing vessel is deliverable. The outlet member has a flange portion and a neck portion that protrudes from the flange portion. The orifice extends between a first exterior opening delimited by the flange portion and a second exterior opening delimited by the neck portion so as to define an axial flow path for the beverage through the orifice. The orifice becomes increasingly narrower from the first exterior opening towards the second exterior opening.

Additionally provided is a brewing vessel assembly, e.g. a portafilter, that comprises the beverage outlet assembly and the kitchen brewing vessel.

Further provided is a beverage machine comprising the brewing vessel assembly and a liquid dispenser for dispensing liquid into the brewing vessel.

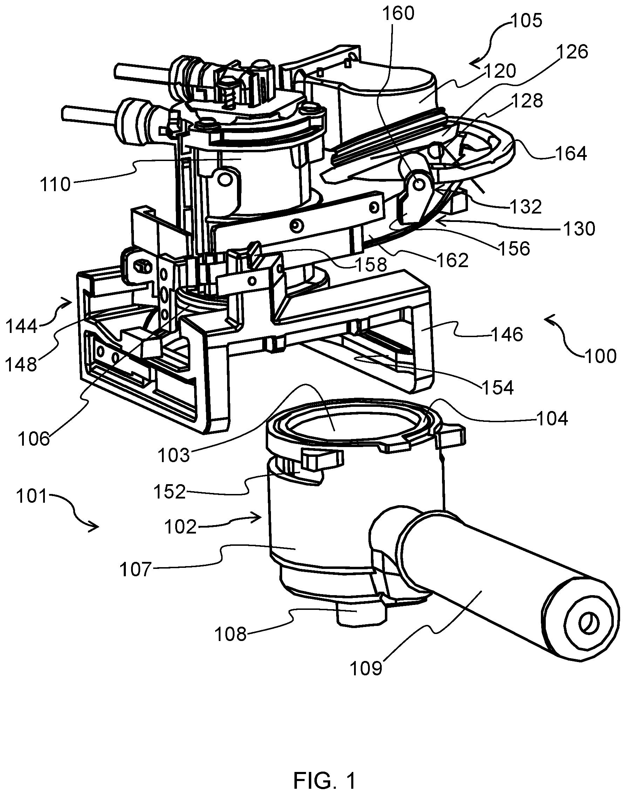

FIG. 1 shows part of a beverage machine 100 according to an example. The beverage machine 100 comprises a brewing vessel assembly 101.

The brewing vessel assembly 101 comprises a kitchen brewing vessel 102 having a cavity 103 in which granular material and liquid are receivable to enable brewing of a beverage. The cavity 103 of the brewing vessel 102 may be delimited by a wall 104 of the brewing vessel 102 that extends around the cavity 103.

Regarding the granular material, particular mention is made of the granular material comprising, e.g. being, ground coffee, although in principle other types of granular material can be combined with the liquid, for example water, in order to brew the beverage.

It is generally noted that the term "granular material" as used herein may refer to a particulate material or powder.

The granular material may be delivered into the brewing vessel 102 in any suitable manner. In some embodiments, and referring again to FIG. 1, the beverage machine 100 includes a dispenser 105 for dispensing the granular material, e.g. ground coffee, into the brewing vessel 102.

In some embodiments, the beverage machine 100 or the brewing vessel assembly 101 includes a tamper head 106 dimensioned to fit into the brewing vessel 102 so that the granular material is compressible between the brewing vessel 102, in particular the wall 104 of the brewing vessel 102, and the tamper head 106.

Compressing, in other words tamping, of the granular material in this manner may provide a compressed mass of granular material through which the liquid, such as water, can be passed to prepare the beverage.

A denser mass of granular material, e.g. coffee grounds, results from the tamping that provides more resistance to liquid flow therethrough than that provided by the granular material prior to tamping.

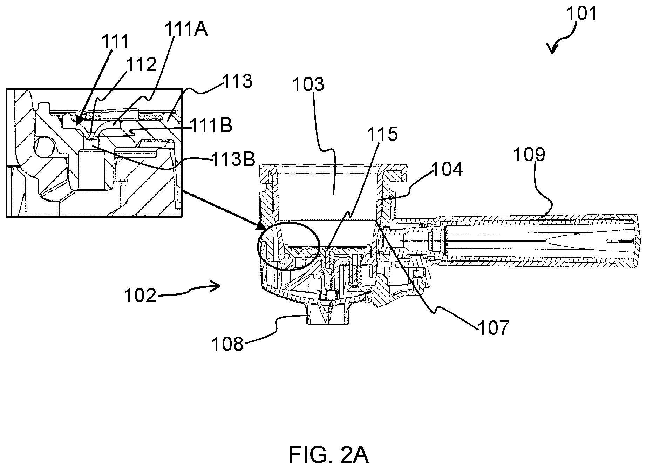

In at least some embodiments, such as shown in FIGs. 1 and 2A, the brewing vessel 102 includes a filter-supporting portion 107 for supporting a filter, for example a filter comprising a perforate base on which the granular material is supportable when received in the cavity 103.

Such a filter may retain the granular material, e.g. ground coffee, but allow the beverage, e.g. brewed coffee, to pass therethrough.

The brewing vessel 102 may also include the filter, e.g. perforate base, on which the granular material is supportable when received in the cavity 103.

In some embodiments, such as shown in FIGs. 1 and 2A, the brewing vessel 102 comprises a spout 108 through which brewed coffee is deliverable, e.g. into a cup or pot placed beneath the spout 108. Such a spout 108 may be arranged downstream of the filter.

The brewing vessel assembly 101 may be a portable component that is manipulable by a user separately from the beverage machine 100 or separately from a remainder of the beverage machine 100 (when the brewing vessel assembly 101 is itself included in the beverage machine 100). To this end, the brewing vessel assembly 101 may have a handle 109 for assisting the user to manipulate the brewing vessel assembly 101, for example to move the brewing vessel assembly 101 towards and away from the beverage machine 100 (or towards and away from the remainder of the beverage machine 100 when the brewing vessel assembly 101 is itself included in the beverage machine 100).

It is noted that the brewing vessel assembly 101 being a portable component and including the filter-supporting portion 107 may cause the brewing vessel assembly 101 to be regarded as a so-called portafilter.

It is reiterated that the brewing vessel assembly 101, e.g. portafilter, may be included in the beverage machine 100. But owing to the possibility of the brewing vessel assembly 101, e.g. portafilter, being a portable component that is manipulable separately from other components of the beverage machine 100, it is also contemplated that the brewing vessel assembly 101 is supplied to the user separately from the beverage machine 100.

As shown in FIG. 1, the beverage machine 100 comprises a liquid dispenser 110, for example a heated liquid dispenser 110, for dispensing liquid into, e.g. forcing liquid through, the vessel's 102 cavity 103.

In particular, the liquid dispenser 110 may deliver liquid, e.g. heated water, to the granular material, for instance tamped granular material, already received in the cavity 103.

In some embodiments, the brewing vessel assembly 101, e.g. portafilter, may be moved by the user to the liquid dispenser 110 in order to receive liquid, e.g. heated water, dispensed by such a liquid dispenser 110.

In such embodiments, the beverage machine 100 in which the liquid dispenser 110 is included may, for example, comprise a semi-automatic coffee machine. Alternatively, the beverage machine 100 may comprise a manual espresso machine or a fully automatic coffee machine.

Any suitable type of liquid dispenser 110 can be contemplated provided that the liquid dispenser 110 is capable of dispensing liquid into the brewing vessel 102. In some embodiments, the liquid dispenser 110 comprises a heater and a liquid flow path along which liquid is displaced by a pump through the heater in order for the liquid to be heated and delivered into the brewing vessel 102.

In some embodiments, the liquid dispenser 110 is configured to dispense liquid into the brewing vessel 102 in response to a liquid pressure, e.g. water pressure, reaching or exceeding a threshold pressure, for example about 4 bar. Such a threshold pressure may, for example, be set according to the type of beverage, e.g. coffee, such as espresso, that is intended to be brewed in the brewing vessel 102.

In such embodiments, one or more valves included in a hydraulic circuit of the liquid dispenser 110 may open in response to the threshold pressure being reached or exceeded.

In some embodiments, the liquid dispenser 110 and the brewing vessel assembly 101 are configured to enable a fluid pressure of at least 4 bar, more preferably, at least 5 bar, most preferably at least 6 bar, to be provided for forcing the liquid, e.g. heated water, through the cavity 103 containing the granular material.

In some embodiments, the liquid dispenser 110 and the brewing vessel assembly 101 are configured to enable a fluid pressure of 5 to 7.8 bar, preferably 6.0 to 7.8 bar, to be provided for forcing the liquid, e.g. heated water, through the cavity 103.

This pressure range may promote brewing performance, for example crema layer generation in the case of coffee brewing, whilst also restricting the pressure to safe levels that may not, for instance, trigger an overpressure valve included in the beverage machine 100.

Alternatively or additionally, the beverage machine 100 may comprise a pressure control system for enabling a controlled pressure to be exerted by a surface of the tamper head 106 on the granular material during tamping.

Movement of the tamper head 106 in order to implement the tamping may be achieved in any suitable manner, for example by movement of the tamper head 106 being hydraulically controlled, pneumatically controlled and/or motorized.

Thus, in some embodiments, the beverage machine 100 comprises one or more of a motorized system, a hydraulic system (as shown in FIG. 1) and a pneumatic system for driving the surface of the tamper head 106 onto the granular material during tamping.

In some embodiments, such as shown in FIG. 1, the tamper head 106 is included in the liquid dispenser 110. In such embodiments, the tamper head 106, as well as tamping the coffee, may close the cavity 103 of the brewing vessel 102 to define a brewing chamber to which the heated liquid is deliverable, e.g. via one or more openings defined in the tamper head 106.

Alternatively or additionally, the liquid dispenser's 110 hydraulic circuit may be configured to control movement, e.g. lowering, of the tamper head 106 towards the granular material received in the brewing vessel 102.

In such embodiments, when the pressure inside the brewing chamber and in the hydraulic circuit reaches or exceeds the threshold pressure, for example about 4 bar, the heated liquid, e.g. water, may be delivered into the brewing chamber. It is reiterated that such pressure-responsive heated water delivery may be implemented by, for example, opening of valve(s) in the hydraulic circuit.

In embodiments in which the liquid dispenser's 110 hydraulic circuit is configured to control movement of the tamper head 106, the liquid, e.g. water, employed for this purpose may not be guided through a heater that may be included in the liquid dispenser 110. This may be in contrast to the path defined for the liquid, e.g. water, used for brewing the beverage.

It is noted, more generally, that a valve can be used to assist with maintaining elevated pressure in the brewing vessel 102, e.g. in the brewing chamber that is partly defined by the brewing vessel 102, during the brewing of the beverage. Such a valve may be a passive component, e.g. equipped with a spring, that only permits flow above a certain pressure.

By maintaining elevated pressure in the brewing vessel 102/brewing chamber in this manner, exit of the brewed beverage at a desired flow rate, for instance with a crema layer in the case of brewed coffee, can be assisted.

Regarding the crema layer, this tends to be seen as a sign of good quality of the brewed coffee. Such a crema layer can be provided by ensuring that the coffee pressure is greater than 4 bar, so as to retain carbon dioxide in solution until the coffee is released via the spout 108 into the user's cup or pot. For this reason, this valve can be termed a "crema valve".

A potential disadvantage of such a valve may be that more liquid, e.g. water, stays behind in the brewing vessel 102 after brewing is complete, which can result in a wet, easily disintegrable mass of granular material that can be difficult to remove from the brewing vessel 102. The latter may also be regarded by consumers as an indication of poor quality.

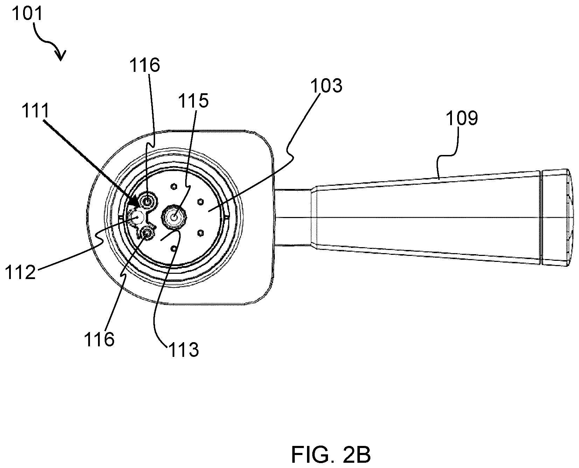

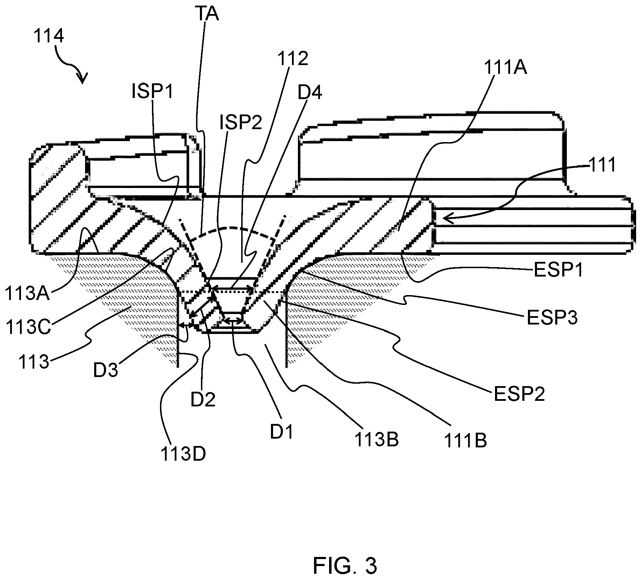

FIGs. 2A, 2B and 3 accordingly show an outlet member 111 for the brewing vessel 102, which outlet member 111 delimits an orifice 112 through which the beverage brewed in the brewing vessel 102, e.g. brewed in the cavity 103 of the brewing vessel 102, is deliverable.

As well as assisting to maintain elevated pressure in the brewing vessel 102/brewing chamber, such an orifice 112 may assist to mitigate the above-described issue relating to the wet, easily disintegrable mass of granular material. In this respect, the orifice 112 can assist to promote complete emptying of the brewing vessel 102, for example as well as assisting to achieve a desired temperature of the brewed beverage received in the user's cup/pot.

In some embodiments, the orifice's 112 minimum cross-sectional area for determining flow rate through the orifice 112 is 0.03 to 0.5 mm², preferably 0.03 to 0.2 mm², such as about 0.09 mm². This range for the orifice's 112 minimum cross-sectional area may assist to promote brewing performance, for example crema layer generation, whilst also facilitating emptying of the brewing vessel 102 after brewing.

The orifice 112 may, for example, have a circular cross-section, e.g. a circular cross-section at all points along the flow path provided by the orifice 112.

In embodiments in which the orifice 112 has such a circular cross-section, and referring now to FIG. 3, the smallest diameter D1 of the orifice 112 may be 0.2 to 0.5 mm, preferably about 0.34 mm.

In some embodiments, the orifice's 112 minimum cross-sectional area of 0.03 to 0.5 mm², preferably 0.03 to 0.2 mm², is provided in combination with a fluid pressure of 5 to 7.8 bar being provided for forcing the liquid, e.g. heated water, through the cavity 103 containing the granular material.

This combination may be particularly beneficial in terms of promoting brewing performance, for example crema layer generation, whilst also assisting to minimize the risk of the pressure compromising the structural integrity of the outlet member 111.

In some embodiments, and referring to FIG. 2B, the orifice's 112 position is offset with respect to a center of the cavity 103. This eccentric positioning of the orifice 112, e.g. in combination with the spout 108 being aligned with the center of the cavity 103, may assist to provide space in which the flow of beverage through the orifice 112 can slow down prior to reaching the spout 108, in a way that minimizes creation of additional turbulence-induced bubbles.

More generally, and as best shown in the inset of FIG. 2A and in FIGs. 3 to 4B, the outlet member 111 has a flange portion 111A and a neck portion 111B that protrudes from the flange portion 111A, with the orifice 112 extending between a first exterior opening delimited by the flange portion 111A and a second exterior opening delimited by the neck portion 111B so as to define an axial flow path for the beverage through the orifice 112.

The first exterior opening of the orifice 112 may define an upstream opening for initially receiving the beverage brewed in the cavity 103, with the second exterior opening of the orifice 112 defining a downstream opening for subsequently allowing the beverage to exit the outlet member 111.

It is noted that the term "axial flow path" may refer to the orifice's 112 linearity enabling the beverage to flow in a straight line through a center of the orifice 112 from a center of the first exterior opening to a center of the second exterior opening.

However, and still referring to the inset of FIG. 2A and to FIG. 3, the orifice 112 becomes narrower from the first exterior opening towards the second exterior opening. This may, for example, cause the second exterior opening delimited by the neck portion 111B to be smaller than the first exterior opening delimited by the flange portion 111A.

The flange portion 111A and the neck portion 111B protruding from the flange portion 111A, together with the orifice 112 narrowing from the first exterior opening towards the second exterior opening, may provide a funnel-like structure. This funnel-like structure has been found to provide enhanced stress distribution in the outlet member 111, and may thus alleviate the risk of cracking of the outlet member 111 as a consequence of pressures exerted during repeated beverage brewing. In particular, this risk of cracking may be lessened compared to, for example, a plate-like outlet member delimiting an orifice of constant diameter that extends across a thickness of the outlet member between exterior surfaces that are parallel with each other.

In fatigue testing using the above-described plate-like outlet members, such plate-like outlet members were observed to perform normally until cracking occurred, with typically two or three cracks being initiated from the surface delimiting a downstream exterior opening of the orifice.

A computer model of such a plate-like outlet member was also created, and this was used in a simulation for showing the effect of 6 bar pressure applied to a top of the outlet member. The simulation indicated high stresses at the bottom/downstream edge of the orifice, which caused deformation that meant that the bottom of the orifice no longer determined the minimum cross-sectional area of the orifice (rather the smallest diameter, 0.626 mm, was at/close to the top of the orifice of the thus deformed outlet member).

In some embodiments, and as best shown in FIG. 3, a support member 113, for example a support plate, is provided to support the outlet member 111.

Such a support member 113, e.g. support plate, may include a main surface portion 113A for supporting the flange portion 111A of the outlet member 111, and an aperture 113B for receiving at least part of the neck portion 111B of the outlet member 111 when the support member 113 is supporting the outlet member 111.

The support member 113, e.g. support plate, may be formed from any suitable material. Particular mention is made of the support member 113 being formed from a rigid material, such as a rigid plastic and/or a metallic material.

In some embodiments, the support member 113 may be included together with the outlet member 111 in a beverage outlet assembly 114. Alternatively, the outlet member 111 may be included in the beverage outlet assembly 114 but without the support member 113, for instance such that the beverage outlet assembly 114 consists of the outlet member 111.

With reference to FIGs. 2A and 2B, the support member 113 may be secured via one or more fastening elements 115, e.g. screw(s), to the brewing vessel 102. In some embodiments, the fastening element(s) 115 may secure the support member 113, and thus the beverage outlet assembly 114 comprising the outlet member 111 and the support member 113, to the brewing vessel 102.

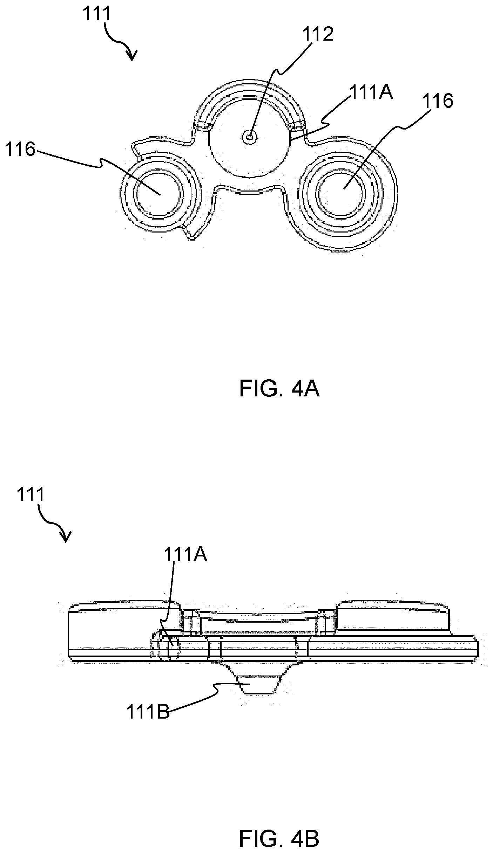

The outlet member 111 may be secured to the support member 113 in any suitable manner. Referring to FIGs. 2B and 4A, the outlet member 111 may include one or more fastening portions 116 for securing the outlet member 111 to the support member 113.

In some embodiments, such as shown in FIG. 3, the flange portion 111A has an interior surface portion ISP1 that delimits a first part of the orifice 112 that is provided in the flange portion 111A, with the interior surface portion ISP1 curvedly extending away from the first exterior opening. As shown in FIG. 3, the curvature of the interior surface portion ISP1 causes narrowing of the first part of the orifice 112 towards the second exterior opening delimited by the neck portion 111B. This curved extension of the interior surface portion ISP1 can assist to distribute stress in the outlet member 111.

As an alternative or in addition to the curvedly extending interior surface portion ISP1, the neck portion 111B may comprise a further interior surface portion ISP2 that narrows towards the second exterior opening delimited by the neck portion 111B. In some embodiments, such as shown in FIG. 3, a curvature of the further interior surface portion ISP2 may be smaller than that of the interior surface portion ISP1.

Alternatively or additionally, the further interior surface portion ISP2 may comprise a tapering section whose taper angle TA is 5 to 100 degrees, preferably 20 to 60 degrees. Such a taper angle may provide particularly beneficial pressure-flow characteristics.

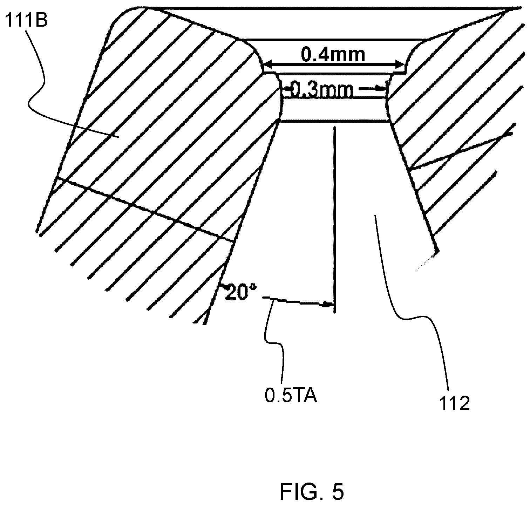

Referring to FIGs. 3 and 5, the tapering section may be a linearly tapering section whose narrowest point is defined from where the orifice 112 is narrowest along the linearly tapering section proximal to the second exterior opening and whose widest point is where the linear tapering towards the narrowest point begins, at a point distal with respect to the second exterior opening.

In this case, the taper angle TA may be calculated using the following equation: TA = 2[tan⁻¹(0.5 × T)], where T = (dl - ds)/L; with dl being the width of the orifice 112 at said widest point where the linear tapering towards the narrowest point begins, ds is the width of the orifice 112 at the narrowest point of the linearly tapering section, and L is the axial distance along the orifice 112 between the narrowest and widest points of the linearly tapering section.

In some embodiments, and still referring to FIG. 3, the flange portion 111A has a first exterior surface portion ESP1, and the neck portion 111B has a second exterior surface portion ESP2, with an intermediate exterior surface portion ESP3 curvedly extending between the first exterior surface portion ESP1 and the second exterior surface portion ESP2. This curved extension of the intermediate exterior surface portion ESP3 can assist to distribute stress in the outlet member 111, for example in combination with the curved extension of the interior surface portion ISP1 from the first exterior opening delimited by the flange portion 111A.

In some embodiments, such as shown in FIG. 3, the support member 113 comprises a curved surface portion 113C that curvedly extends between the main surface portion 113A and an interior surface 113D delimiting the aperture 113B.

In such embodiments, at least part of the intermediate exterior surface portion ESP3 of the outlet member 111 may be shaped to contact and follow the curvature of the curved surface portion 113C. In this way, the risk of damage to the outlet member 111 by deformation against the support member 113 can be lessened.

It is generally noted that the flange portion 111A and the neck portion 111B may be formed, e.g. molded, as a single piece.

Alternatively or additionally, the flange portion 111A and the neck portion 111B may be formed from an elastomeric material. Forming the flange portion 111A and the neck portion 111B from such an elastomeric material can assist to alleviate the risk of blockage of the orifice 112, since the elastomeric material may deform to allow a particle that has become stuck in the orifice 112 to pass therethrough instead of continuing to block the orifice 112.

Alternatively or additionally, such an elastomeric material may assist to provide enhanced pressure-flow characteristics relative to those attainable using a rigid material for the outlet member 111. For example, the elastomeric material can assist to make the desired pressure range achievable across a wider flow range.

A further benefit of the elastomeric material may be self-sealing of the outlet member 111 in its seat, e.g. in a seat provided by the support member 113. Such self-sealing can, for example, obviate the need for a press-fit.

The elastomeric material can be of any suitable type. Particular mention is made of the elastomeric material being an oil-resistant elastomer/rubber, for example silicone. Preferably, the elastomeric material is silicone.

It is noted that suitable elastomeric materials may be commercially available. ELASTOSIL^{®} LR 3003/70 A from Wacker Chemie AG is an example of a commercially available silicone that can be used to form the outlet member 111.

In some embodiments, the flange portion 111A and the neck portion 111B are formed from a material, e.g. the elastomeric material, such as silicone, whose hardness is from 50 to 80 Shore A, preferably about 70 Shore A. Such a hardness may provide sufficient flexibility to minimize blockage of the orifice 112 while also helping to resist change of the orifice's 112 dimensions when the outlet member 111 is subjected to elevated pressure during brewing.

In embodiments in which the flange portion 111A and the neck portion 111B are formed, e.g. molded, as a single piece, the outlet member 111 may be formed from the elastomeric material and/or the material whose hardness is from 50 to 80 Shore A.

In some embodiments, such as shown in FIG. 3, a wall thickness D2 of the neck portion is 0.2 to 2 mm. Such a wall thickness D2 may facilitate distribution of stress in the outlet member 111, while also assisting to resist change of the orifice's 112 dimensions during brewing, particularly in embodiments in which the neck portion 111B is formed from the elastomeric and/or the 50 to 80 Shore A material.

It is noted that the outlet member 111 can be formed by any suitable process, for example a molding process. Particular mention is made of the outlet member 111 being formed by injection molding.

For example, in such a molding, e.g. injection molding, process, the flange portion 111A and the neck portion 111B may be molded as a single piece.

In some embodiments, such as shown in FIG. 3, a free part of the neck portion 111B is spaced apart from, and free to move relative to, the support member 113 while the outlet member 111 is being supported by the support member 113.

The play provided by the free part of the neck portion 111B may assist stress distribution in the outlet member 111, and thus assist to lessen the risk of premature failure of the outlet member 111.

In some embodiments, and still referring to FIG. 3, a gap D3 between the free part of the neck portion 111B and the support member 113 becomes larger, for example becomes progressively larger, with greater extension of the neck portion 111B away from the flange portion 111A. Maximum play may, for instance, be provided around the second exterior opening delimited by the neck portion 111B.

A double-headed arrow D4 in FIG. 3 denotes a maximum cross-sectional area in a portion of the orifice 112 around which the free part of the neck portion 111B extends. Preferably, this maximum cross-sectional area is smaller than four times the orifice's 112 minimum cross-sectional area when there is no liquid flow through the orifice 112. This has been found to provide favorable and consistent brewing performance.

It is noted that the second exterior opening delimited by the neck portion 111B may not necessarily constitute the narrowest part of the orifice 112. FIG. 5 shows an example in which the second exterior opening is wider than the narrowest part of the orifice 112. The diameter of the narrowest part of the orifice 112 in this particular non-limiting example is 0.3 mm, whereas the diameter of the second exterior opening is 0.4 mm.

This diameter difference may reflect that manufacturing a perfectly smooth shape for the outlet member 111/orifice 112 may not be feasible in practice, and hence introducing some degree of tolerance may be necessary.

In order to provide an orifice 112 of the type shown in FIG. 5, the outlet member 111 may be molded, e.g. injection molded, using two mold pins for forming the orifice 112, with one of the mold pins having a larger diameter, e.g. by 0.1 mm, than the other mold pin.

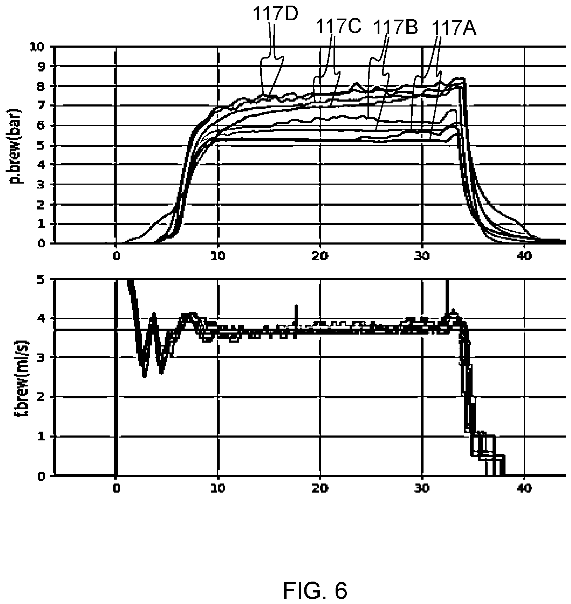

FIG. 6 provides graphs of average counterpressure (bar; upper plots) and flow (ml/s; lower plots) vs. time (seconds) for four outlet members 111 each having the design shown in FIG. 3 but differing from each other in terms of their Shore A hardness. This testing was carried out using a beverage machine 100 having a liquid dispenser 110 of the type described above but without the granular material, to ensure that the flow resistance was solely induced by the orifice 112.

Graphs 117A correspond to the 50 Shore A outlet member 111, graphs 117B correspond to the 60 Shore A outlet member 111, graphs 117C correspond to the 70 Shore A outlet member 111, and graphs 117D correspond to the 80 Shore A outlet member 111.

For each of the outlet members 111, stable behavior at 3.7 ml/s was observed to occur between 10 and 30 seconds.

It is noted that the 70 Shore A outlet member 111 was identified as being particularly suitable, noting that the counterpressure for this outlet member 111 was above 6 bar during the period between 10 and 30 seconds, and the pressure being at least 6 bar may assist to compensate for potential lost flow resistance due to dimensional changes in the outlet member 111.

Aging tests were also undertaken using three 70 Shore A outlet members 111 having the design shown in FIG. 3. These outlet members 111 were aged for 20000 to 30000 cycles of brewing using 95 °C water for 25 seconds. A ratio of allowing flow applying resistance was measured multiple times during lifetime until the 30000 cycles were completed. Pressure loss over the lifetime was measured continuously (hot) during testing, and at three intervals on a valve test bench (cold). These measurements indicated that pressure loss was only about 0.3 bar.

These experiments indicated that the outlet member 111 had a favorable design capable of withstanding repeated exposure to elevated pressures, and was also formed from a well-selected material.

A series of simulations were also carried out to verify robustness of the design. Numerical modeling was carried out to calculate stresses and strains in the outlet member 111 as a function of the parameters presented in Table 1 below.

**Table 1**

| Parameter | Target value | Estimated 3-sigma | Simulation range |
|---|---|---|---|
| Shore A Hardness | 70 | 5 | 60 - 75 |
| D1/mm | 0.34 | 0.05 | 0.29 - 0.39 |
| D2/mm | 0.53 | 0.1 | 0.43 - 0.63 |

The modelling was based on increasing hydraulic pressure inside the orifice 112. This approach provided insights concerning the dimensions of the orifice 112 and the resulting stresses as a function of pressure. Attainment of such pressures may depend on the design of the liquid dispenser 110. Dimensions and stresses during use may be determined based on the orifice's 112 diameter as a function of pressure being intersected with flow as a function of pressure as calculated using the following Bernoulli expression: Flow = contraction coefficient * minimum cross-sectional area of the orifice * SQRT ((2 * pressure) / density)).

The contraction coefficient can be fitted, noting that the nominal minimum cross-sectional area of the orifice 112 has a working pressure of about 6 to 7 bar. This corresponds to a contraction coefficient of 0.7 to 0.6. The latter may be realistic/reasonable for an orifice 112 having a circular cross-section.

The calculation of the working point was carried out for all simulated outlet members 111, and a stress level plot and a nominal orifice working point intersection were obtained. Using a Design of Experiments (DoE) approach, tolerances for each of the parameters identified in Table 1 above were estimated.

Referring again to FIG. 1, the dispenser 105 for dispensing the granular material comprises a container 120 having an outlet through which the granular material, e.g. ground coffee, is deliverable from the container 120.

The container 120 may comprise, e.g. be in the form of, a chute through which the granular material is deliverable, e.g. at least partly by gravity.

Such a chute may terminate at a chute opening that defines the outlet through which the granular material is deliverable from the chute into the brewing vessel 102.

In at least some embodiments, the beverage machine 100 comprises a grinding assembly for grinding material, e.g. coffee beans, to form the granular material, e.g. ground coffee.

The grinding assembly may thus provide the granular material that is deliverable from the container 120, e.g. chute. In such embodiments, the container 120 may extend beneath the grinding assembly to enable the granular material provided by the grinding assembly to be moved away therefrom at least partly by gravity.

In some embodiments, and with continued reference to FIG. 1, the dispenser 105 comprises a shutter 126 movable between an open position that allows the granular material to be delivered via the outlet, and a closed position that blocks delivery of the granular material via the outlet.

The capability of the shutter 126 to block the outlet, e.g. chute opening, when adopting the closed position may assist to minimize or prevent unintentional egress of residual granular material from the container 120 and concomitant pollution of surroundings by the granular material.

Any residual granular material collected on the shutter 126 when the shutter 126 is in the closed position may be delivered into the brewing vessel 102 when the shutter 126 subsequently adopts the open position.

It is noted that the shutter 126 may serve an additional purpose in embodiments in which the dispenser 105 is included in the beverage machine 100 together with the liquid dispenser 110, or at least when such a liquid dispenser 110 is being operated proximal to the dispenser 105. In this respect, the shutter 126 may assist to restrict ingress of steam into the container 120, e.g. towards the above-described grinding assembly. By limiting passage of moisture into the container 120 in this manner, reliability of granular material delivery may be enhanced.

To this end, the dispenser 105 may include a sealing member, e.g. a gasket made from an elastomeric material, e.g. silicone rubber, arranged to provide a seal between the shutter 126 and the container 120 when the shutter 126 is in the closed position.

In at least some embodiments, and still referring to FIG. 1, the dispenser 105 comprises a biasing element 128 arranged to bias the shutter 126 into the closed position.

Thus, the default position adopted by the shutter 126 may be the closed position. In this way, unintentional egress of residual granular material from the container 120 and, for example, steam ingress into the container 120 may be minimized or prevented when the dispenser 105 is not being employed to dispense granular material into the brewing vessel 102.

Any suitable type of biasing element 128 can be contemplated for biasing the shutter 126 into the closed position. In some embodiments, such as shown in FIG. 1, the biasing element 128 comprises, e.g. is in the form of, a spring.

The spring used as the biasing element 128 can be of any suitable type. In some embodiments, the spring is a torsion spring. Such a torsion spring may be particularly suitable in embodiments, such as shown in FIG. 1, in which the shutter 126 is pivotable between the open position and the closed position.

In some embodiments, such as shown in FIG. 1, the dispenser 105 comprises a position determination element 130 arranged to be triggered by the outlet of the container 120 and the brewing vessel 102 adopting a defined position relative to each other, and a shutter mover 132 arranged to cause movement of the shutter 126 from the closed position to the open position in response to the position determination element 130 being triggered. The defined position of the outlet and the brewing vessel 102 relative to each other, and the shutter 126 being in the open position may permit delivery of the granular material into the brewing vessel 102.

Thus, the delivery of ground coffee via the outlet may be implemented according to a defined, e.g. pre-set, spatial relationship between the outlet and the brewing vessel 102.

This may assist in attaining the desired delivery of the granular material into the brewing vessel 102, and thus the desired distribution of the granular material in the brewing vessel 102.

Moreover, pollution of surroundings of the dispenser 105 by granular material may be alleviated due to the movement of the shutter 126 from the closed position to the open position being contingent on adoption of the defined position of the outlet and the brewing vessel 102 relative to each other.

In some embodiments, the defined position comprises alignment of the wall 104 that extends around the cavity 103 with a (further) wall of the container 120 that delimits the outlet so that the wall 104 and the further wall guide the ground coffee delivered from the container 120 into the cavity 103.

This alignment between the wall 104 and the further wall may assist to minimize or prevent pollution of the beverage machine 100 and/or an area surrounding the beverage machine 100 by granular material.

In some embodiments, arrangement of the brewing vessel 102 relative to the liquid dispenser 110 and relative to the dispenser 105 is configurable to enable switching between a granular material dispensing configuration in which the dispenser 105 and the brewing vessel 102 are arranged to enable the granular material to be dispensed by the dispenser 105 into the brewing vessel 102, and a tamping and brewing configuration in which the tamper head 106, the liquid dispenser 110 and the brewing vessel 102 are arranged to enable the granular material in the brewing vessel 102 to be tamped, and the heated liquid to be delivered to the tamped granular material in the brewing vessel 102.

In the tamping and brewing configuration, a liquid outlet of the liquid dispenser 110 and the brewing vessel 102 are positioned relative to each other, e.g. in a "brew position", so that heated liquid is deliverable into the brewing vessel 102.

In the granular material dispensing configuration, the brewing vessel 102 and the outlet of the container 120 adopt the defined position, which can be regarded as a "fill position" because the granular material, e.g. ground coffee, is able to fill the brewing vessel 102.

The shutter 126 may be fully open when the brewing vessel 102 is in the fill position (or "grind position" in embodiments in which the grinding assembly is included in the dispenser 105), and fully closed as soon as the brewing vessel 102 is out of, in other words displaced from, the fill position.

In some embodiments, the tamping and brewing configuration comprises alignment of a central heated water delivery axis of the liquid dispenser 110 that extends through a center of the liquid outlet or tamper head 106 and a central axis of the brewing vessel 102 which passes through a center of the cavity 103.

In this tamping and brewing configuration, or in any other arrangement in which the brewing vessel 102 is spatially removed from the defined position, the shutter 126 may remain closed, for example due to the biasing element 128 biasing the shutter 126 into the closed position.

In at least some embodiments, relative movement of the brewing vessel 102 and the outlet so that the defined position is no longer adopted, for example by moving the brewing vessel 102 away from the outlet following delivery of the ground coffee into the brewing vessel 102, causes the shutter 126 to adopt the closed position. The latter can, for example, be implemented via the above-described biasing element 128.

The nature of the relative movement of the brewing vessel 102 and the outlet in order to reach the defined position is not particularly limited. In some embodiments, the brewing vessel 102 is displaced, e.g. displaced in a horizontal plane, towards the outlet while the outlet's position remains fixed. However, alternative possibilities can be contemplated, e.g. provided that the position determination element 130 can be appropriately configured to determine adoption of the defined position of the brewing vessel 102 and outlet relative to each other.

In some embodiments, the brewing vessel 102 may rotate, e.g. about its central axis, in order to reach the defined position.

Alternatively or additionally, the brewing vessel 102 may be displaced upwardly or downwardly, e.g. while the outlet's elevation remains fixed, in order to reach the defined position.

In other embodiments, the brewing vessel 102 may not itself be required to move in order for the defined position to be adopted. For example, the vessel's 102 position may be fixed, e.g. by the brewing vessel 102 being statically mountable in the beverage machine 100, and the container 120 may be movable to bring the outlet to the defined position.

Such movement of the container 120 can be implemented in any suitable manner. In some embodiments, the container 120, e.g. chute, is pivotably mounted, with pivoting of the container 120, e.g. chute, towards the brewing vessel 102 enabling adoption of the defined position.

In such embodiments, movement, e.g. pivoting, of the container 120 away from the defined position may be for the purpose of, for example, providing space for the tamper head 106 to approach the mounted brewing vessel 102 in order to implement tamping of the granular material received in the brewing vessel 102.

In some embodiments, such as shown in FIG. 1, the beverage machine 100 comprises a guiding assembly 144 configured to guide movement of the brewing vessel 102 and the outlet relative to each other in order to bring the brewing vessel 102 and the outlet into the defined position.

Such a guiding assembly 144 may provide a convenient way of facilitating arrangement of the outlet and the brewing vessel 102 in the defined position.

In some embodiments, the guiding assembly 144 is configured to guide movement of the brewing vessel 102 relative to the outlet of the container 120 and relative to the liquid outlet of the liquid dispenser 110 to enable switching between the dispensing configuration in which the dispenser 105 and the brewing vessel 102 are arranged to enable the granular material to be dispensed by the dispenser 105 into the brewing vessel 102, and the tamping and brewing configuration in which the tamper head 106, the liquid dispenser 110 and the brewing vessel 102 are arranged to enable the granular material in the brewing vessel 102 to be tamped, and the liquid to be delivered to the tamped granular material in the brewing vessel 102.

The guiding assembly 144 can be configured in any suitable manner in order to guide movement of the brewing vessel 102 and the outlet relative to each other.

In some embodiments, the guiding assembly 144 is configured to guide movement of the brewing vessel 102 relative to a fixed position of the outlet.

Alternatively, the guiding assembly 144 may be configured to guide movement of the container 120 relative to a fixed position of the brewing vessel 102 in order to bring the outlet and the brewing vessel 102 into the defined position relative to each other.

In some embodiments, such as shown in FIG. 1, the guiding assembly 144 comprises a carrier 146 for carrying the brewing vessel 102, and a carrier movement assembly for guiding the carrier 146, together with the brewing vessel 102, towards the outlet. In such embodiments, the carrier movement assembly may include runner(s) and/or rail(s) 148 for enabling sliding movement of the carrier 146.

The brewing vessel 102 may be received in the carrier 146 in any suitable manner. In some embodiments, such as shown in FIG. 1, one or more grooves 152 may be defined in the brewing vessel 102, e.g. in an exterior surface of the brewing vessel 102, with the carrier 146 comprising protrusion(s) 154 that engage with the groove(s) 152 when the brewing vessel 102 is received in the carrier 146 in order to secure the brewing vessel 102 to the carrier 146.

It is noted that the groove(s) 152 and the protrusion(s) 154 can be included in a bayonet-type coupling between the brewing vessel 102 and the carrier 146. Numerous alternative ways of receiving and securing the brewing vessel 102 in the carrier 146 can be contemplated, such as protrusion(s) protruding from the external surface of the brewing vessel 102, with such protrusion(s) being receivable in groove(s) defined in the carrier 146, and so on.

In alternative embodiments, the carrier 146 is omitted. For example, the brewing vessel 102 may itself be slidable along runner(s) and/or rail(s) 148 included in the guiding assembly 144.

More generally, any form of movement may be guided by the guiding assembly 144 provided that the brewing vessel 102 and/or the outlet can be guided so as to adopt the defined position. In some embodiments, such as shown in FIG. 1, the movement guided by the guiding assembly 144 comprises translational movement of the brewing vessel 102 and the outlet relative to each other. Such a translational movement may comprise a linear translational movement and/or an arcuate translational movement.

In a non-limiting example, the guiding assembly 144 comprises curved rails 148 that form a circle segment in a horizontal plane, with the center point of the curvature of the rails 148 lying distal with respect to a circumference of the wall 104 of the brewing vessel 102. In such an example, a lateral movement with a (slight) rotation of the carrier 146 between the brew position and the fill position may be evident to the user standing in front of the guiding assembly 144.

In some embodiments, the beverage machine 100 includes a sensing system arranged to detect approach of the brewing vessel 102 and/or the carrier 146 towards the fill position, and a controller configured to activate the grinding assembly to grind the material, e.g. coffee beans, based on the sensor detecting this approach.

In such embodiments, the brewing vessel 102 or the carrier 146 may include a magnet, with the sensing system comprising a Hall sensor for detecting approach of the brewing vessel 102 and/or the carrier 146 towards the fill position via detection of the magnet's magnetic field.

In some embodiments, the controller may be triggered by a signal from the sensing system, e.g. Hall sensor, to activate the grinding assembly to grind the material, e.g. coffee beans, but with a delay for allowing the brewing vessel 102 and/or the carrier 146 to reach the fill position. For example, a 0.5 to 1 second delay may be implemented by the controller.

Turning to the position determination element 130 and the shutter mover 132, these components can have any suitable design provided that the position determination element 130 is triggerable by, in other words in response to, the outlet and the brewing vessel 102 adopting the defined position relative to each other, and the shutter mover 132 is capable of moving the shutter 126 from the closed position to the open position in response to the position determination element 130 being triggered.

In some embodiments, the position determination element 130 comprises a sensor for sensing adoption of the defined position, and a controller adapted to control the shutter mover 132, e.g. an electromechanical shutter actuator, to move the shutter 126 from the closed position to the open position based on data from the sensor being indicative of adoption of the defined position.

In such embodiments, any suitable sensor may be employed for the position determination element 130. For example, an optical sensor arranged to optically sense adoption of the defined position, e.g. by a light beam being interrupted by the brewing vessel 102 and/or the container 120 reaching a position corresponding to the defined position.

In other embodiments, such as shown in FIG. 1, the position determination element 130 and the shutter mover 132 are arranged to mechanically determine adoption of the defined position and move the shutter 126 from the closed position to the open position. Such a mechanically-implemented position determination and shutter 126 actuation may be more cost-effective to implement than, for example, the above-described solution utilizing a sensor- and controller-comprising position determination element 130, and an electromechanical shutter actuator.

In some embodiments, such as shown in FIG. 1, the position determination element 130 comprises a lever member 156. In such embodiments, the shutter mover 132 may be arranged to cause movement of the shutter 126 from the closed position to the open position in response to movement of the lever member 156 caused by adoption of the defined position. This may provide a relatively simple and cost-effective way of implementing the position determination element 130 and the shutter mover 132.

In some embodiments, the guiding assembly 144 comprises a contact portion 158 arranged to bear against an activation point of the lever member 156 when the outlet and the brewing vessel 102 adopt the defined position.

In such embodiments, the contact portion 158 may be included in the carrier 146 and arranged to bear against the lever member 156 when the carrier 146 carrying the brewing vessel 102 reaches a position in which the outlet and the brewing vessel 102 adopt the defined position relative to each other.

In alternative embodiments, the contact portion 158 may be included in the brewing vessel 102 itself. In such embodiments, the vessel-comprising contact portion may bear against the lever member's 156 activation point when the brewing vessel 102 is positioned so that the outlet and the brewing vessel 102 adopt the defined position relative to each other.

In some embodiments, the shutter mover 132 comprises a pivot 160 arranged to enable pivoting of the shutter 126 to open and close the outlet. This may provide a relatively straightforward and reliable way of moving the shutter 126.

As previously noted, a biasing element 128, e.g. a spring, may be arranged to bias the shutter 126 into the closed position. In such embodiments, the position determination element 130 and the shutter mover 132 may be arranged to enable the bias to be overcome when the outlet and the brewing vessel 102 adopt the defined position.

In some embodiments, such as shown in FIG. 1, the biasing element 128, e.g. spring, is arranged to bias rotation of the shutter 126 about the pivot 160 into the closed position. In such embodiments, the biasing of the shutter 126 into the closed position may be overcome by movement of the lever member 156, e.g. when the contact portion 158 bears against the lever member 156. Such movement of the lever member 156 may cause pivoting of the shutter 126 about the pivot 160, against the bias provided by the biasing element 128, thereby to expose the outlet.

When the shutter 126 is in the open position, the ground coffee is deliverable into the brewing vessel 102 as previously described. In some embodiments, the dispenser 105 includes a lower chute element 162 arranged between the outlet and the brewing vessel 102 when the defined position is adopted.

The lower chute element 162 may assist to guide the granular material into the brewing vessel 102.

As an alternative or in addition to the lower chute element 162, the dispenser 105 may include pollution shielding 164 arranged around the container 120 proximal to the outlet.

The pollution shielding 164 may act as a physical barrier to granular material, to prevent any granular material that has escaped from the outlet but not received in the brewing vessel 102 from being transported too far away from the container 120.

It is generally noted that the brewing vessel 102 may be manually movable by the user, e.g. while being guided by the guiding assembly 144, and/or may be movable by a suitable movement mechanism, e.g. an electric and/or hydraulic movement mechanism, for driving movement of the brewing vessel 102 and/or the container 120/outlet towards each other to adopt the defined position.

In some embodiments, and irrespective of how movement of the brewing vessel 102 is implemented, the dispenser 105 includes a locking mechanism configured to retain the brewing vessel 102 and the outlet at the defined position relative to each other while the ground coffee is being delivered into the brewing vessel 102. This may further assist in minimizing or avoiding pollution by granular material because the locking mechanism may mitigate the risk of relative movement away from the defined position while the ground coffee is being delivered into the brewing vessel 102.

In some embodiments, the locking mechanism comprises a retractable pin arranged to retain the carrier 146 in a position that enables the brewing vessel 102 carried by the carrier 146 to adopt the defined position relative to the outlet. The pin may be retracted/released in any suitable manner, e.g. hydraulically.

In some embodiments, movement of the brewing vessel 102 and/or the carrier 146 to the fill position, e.g. from the brew position, may cause tensioning of a resilient member, e.g. a spring. Release of the tension in the resilient member may drive the vessel's 102 and/or the carrier's 146 return to the brew position.

The resilient member may return the brewing vessel 102 and/or the carrier 146 to the brew position, when, for example, the locking mechanism releases the brewing vessel 102 and/or the carrier 146, e.g. via retraction of the pin.

The return movement may, for example, be dampened by suitable damping means to prevent ground coffee in the brewing vessel 102 from becoming unevenly distributed or being spilled from the brewing vessel 102 during transit back to the brew position.

The controller may be configured to operate/activate the grinding assembly for a fixed amount of time, e.g. 8 to 10 seconds. Such a fixed amount of time may be empirically determined. Alternatively or additionally, the beverage machine 100 may include an additional sensor, for example an optical sensor, e.g. light gate-type sensor, for providing feedback on grinding. In such embodiments, the controller may adjust the amount of time during which the grinding assembly is activated based on the feedback.

In this way, variations associated with the grinding assembly and/or the material, e.g. coffee beans, that can cause inaccurate dosing may be accounted for.

When the grinding assembly is deactivated to stop grinding the material, e.g. coffee beans, the controller may control the locking mechanism to release the brewing vessel 102 and/or the carrier 146, to enable the brewing vessel 102 and/or the carrier 146 to return to the fill position, e.g. by action of the resilient member.

In such embodiments, the controller may control a pump, e.g. the pump included in the hydraulic circuit of the liquid dispenser 110, to pump water from a water reservoir to a hydraulic valve that includes a piston connected to the pin. This may cause retraction of the pin, thus unlocking the brewing vessel 102 and/or the carrier 146 to allowing it or them to return to the brew position by action of the resilient member.

When the brewing vessel 102 and/or the carrier 146 reaches the brew position, this may be detected by a further sensing system, e.g. a (further) Hall sensor. The signal from the further sensing system that indicates return to the brew position may be used by the controller as a basis on which to operate, e.g. continue operation of, the pump.

In such embodiments, this pump operation may cause liquid, e.g. water, from a liquid reservoir to be pumped towards the tamper head 106. Tamping of the ground coffee in the brewing vessel 102 may then ensue, followed by delivery of the heated liquid, as previously described.

In some embodiments, the controller controls the pump time during which heated liquid is delivered to the brewing vessel 102 based on information received from a flow meter.

When the desired volume of water, e.g. as indicated using the information received from the flow meter, has been pumped to the brewing chamber, the pump may be stopped.

The controller may be configured to control an electronic valve to allow water used to move the tamper head 106 to flow back to the water reservoir. In this way, pressure exerted by the tamper head 106 on the granular material in the brewing vessel 102 can be released.

In such embodiments, retraction of the tamper head 106 may be assisted by recovery of a resilient element, e.g. spring, that is pretensioned by the initial movement of the tamper head 106 that causes tamping of the granular material received in the brewing vessel 102.

The controller may be configured to implement a time delay, e.g. of about 10 seconds, between stopping heated liquid delivery to the brewing chamber and controlling the electronic valve to allow water used to move the tamper head 106 to flow back to the water reservoir. As well as allowing time for pressure in the brewing chamber to decrease, this time delay may permit water to be released/pressed from the puck of granular material. It is noted that the above-mentioned 10 seconds time delay has been empirically determined.

The brewing vessel 102 may then be emptied in order to start a new brew cycle. For example, the brewing vessel assembly 101, e.g. portafilter, may first be removed from the beverage machine 100 and the used granular material emptied therefrom.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A beverage outlet assembly (114) for a kitchen brewing vessel (102), the beverage outlet assembly comprising an outlet member (111) that delimits an orifice (112) through which a beverage brewed in the brewing vessel is deliverable, the outlet member having a flange portion (111A) and a neck portion (111B) that protrudes from the flange portion, the orifice extending between a first exterior opening delimited by the flange portion and a second exterior opening delimited by the neck portion so as to define an axial flow path for the beverage through the orifice, the orifice narrowing from the first exterior opening towards the second exterior opening.

2. The beverage outlet assembly (114) according to claim 1, wherein the flange portion (111A) and the neck portion (111B) are formed from an elastomeric material, optionally wherein the elastomeric material is silicone.

3. The beverage outlet assembly (114) according to claim 1 or claim 2, wherein the flange portion (111A) and the neck portion (111B) are formed from a material whose hardness is from 50 to 80 Shore A.

4. The beverage outlet assembly (114) according to any one of claims 1 to 3, wherein the flange portion (111A) has an interior surface portion (ISP1) that delimits a first part of the orifice (112) that is provided in the flange portion, the interior surface portion curvedly extending away from the first exterior opening, the curvature of the interior surface portion causing narrowing of the first part of the orifice towards the second exterior opening.

5. The beverage outlet assembly (114) according to any one of claims 1 to 4, wherein the neck portion (111B) comprises a further interior surface portion (ISP2) that narrows towards the second exterior opening.

6. The beverage outlet assembly (114) according to claim 5, wherein the further interior surface portion (ISP2) comprises a tapering section whose taper angle (TA) is 5 to 100 degrees, preferably 20 to 60 degrees.

7. The beverage outlet assembly (114) according to any one of claims 1 to 6, wherein the flange portion (111A) has a first exterior surface portion (ESP1), and the neck portion (111B) has a second exterior surface portion (ESP2), an intermediate exterior surface portion (ESP3) curvedly extending between the first exterior surface portion and the second exterior surface portion.

8. The beverage outlet assembly (114) according to any one of claims 1 to 7, wherein the orifice's (112) minimum cross-sectional area for determining flow rate through the orifice is 0.03 to 0.5 mm², preferably 0.03 to 0.2 mm².

9. The beverage outlet assembly (114) according to any one of claims 1 to 8, wherein a wall thickness (D2) of the neck portion (111B) is 0.2 to 2 mm.

10. The beverage outlet assembly (114) according to any one of claims 1 to 9, comprising a support member (113) for supporting the outlet member (111), the support member comprising:
a main surface portion (113A) for supporting the flange portion (111A); and
an aperture (113B) for receiving at least part of the neck portion (111B) when the support member is supporting the outlet member.

11. The beverage outlet assembly (114) according to claim 10 as according to claim 7, wherein the support member (113) comprises a curved surface portion (113C) that curvedly extends from the main surface portion (113A), at least part of the intermediate exterior surface portion (ESP3) being shaped to contact and follow the curvature of the curved surface portion.

12. The beverage outlet assembly (114) according to claim 10 or claim 11, wherein a free part of the neck portion (111B) is spaced apart from, and free to move relative to, the support member (113) while the outlet member (111) is being supported by the support member; optionally wherein a gap (D3) between the free part of the neck portion and the support member becomes larger with greater extension of the neck portion away from the flange portion (111A).

13. The beverage outlet assembly (114) according to claim 12, wherein the orifice's (112) maximum cross-sectional area in a portion of the orifice delimited by said free part of the neck portion (111B) is smaller than four times the orifice's minimum cross-sectional area when there is no liquid flow through the orifice.

14. A brewing vessel assembly (101) comprising:
a kitchen brewing vessel (102) having a cavity (103) in which granular material and liquid are receivable to enable brewing of a beverage; and
the beverage outlet assembly (114) according to any one of claims 1 to 13,
wherein the outlet member (111) is arranged or arrangeable in the brewing vessel assembly so that the first exterior opening of the orifice (112) defines an upstream opening for initially receiving the beverage brewed in the cavity and the second exterior opening of the orifice defines a downstream opening for subsequently allowing the beverage to exit the outlet member; optionally wherein the orifice's position is offset with respect to a center of the cavity.

15. A beverage machine (100) comprising:
the brewing vessel assembly (101) according to claim 14; and
a liquid dispenser (110) for dispensing liquid into the cavity (103), optionally wherein the liquid dispenser and the brewing vessel assembly are configured to enable a fluid pressure of at least 4 bar, more preferably, at least 5 bar to be provided for forcing said liquid through the cavity containing the granular material.
